# EUROPÄISCHE PATENTSCHRIFT

(11) **EP 1 602 214 B1**
(45) Veröffentlichungstag und Bekanntmachung des Hinweises auf die Patenterteilung: **02.11.2016**
(21) Anmeldenummer: 04717031.1
(22) Anmeldetag: 04.03.2004
(51) Int. Cl.: H04L 29/06, H04L 29/08

(54) **Verfahren, system und speichermedium um kompatibilität zwischen IPsec und dynamischem routing herzustellen**
Method, system and storage medium for establishing compatibility between IPsec and dynamic routing
Procédé, système et support de données pour établir la compatibilité entre IPsec et routage dynamique

(30) Priorität: 04.03.2003 DE 10310253; 03.09.2003 US 499982 P
(43) Veröffentlichungstag der Anmeldung: 07.12.2005
(73) Patentinhaber: Wunner, Lukas, 72028 Tübingen (DE)
(72) Erfinder: Wunner, Lukas, 72028 Tübingen (DE)
(86) Internationale Anmeldenummer: PCT/DE2004/000426
(87) Internationale Veröffentlichungsnummer: WO 2004/080026

(56) Entgegenhaltungen:
- WO-A-01/05086
- WO-A-01/82097
- WO-A-02/089395
- WO-A-03/014890
- US-B1- 6 330 562
- TOUCH J., EGGERT L.: "Use of IPsec Transport Mode for Dynamic Routing draft-touch-ipsec-vpn-04.txt" 24. Juni 2002 (2002-06-24), IETF , IETF , XP015005511 Zusammenfassung Kapitel 3.1 Abbildungen 1-5

## Beschreibung

Die Erfindung betrifft ein Verfahren und Speichermedium für ein Datennetzwerk gemäß dem Oberbegriff des Patentanspruchs 1 sowie Systeme gemäß dem Oberbegriff des Anspruchs 2. Insbesondere bezieht sich die Erfindung auf den IPsec-Standard.

Aus dem Stand der Technik ist die Protokollsuite "IPsec" bekannt (RFC 2401, http://www.ietf.org/rfc/rfc2401.txt): IPsec stellt interoperable, hochqualitative, kryptographiebasierte Sicherheit für die IPv4 und IPv6 Protokolle zur Verfügung. IPsec bietet unter anderem die Dienste Zugangskontrolle, verbindungslose Integritätssicherung der Daten, Authentizitätssicherung der Datenherkunft, Schutz gegen Replay-Angriffe, Vertraulichkeit der Daten (Verschlüsselung) sowie eingeschränkt auch Vertraulichkeit des Verkehrsflusses an. Diese Dienste werden auf IP-Ebene (Network Layer) zur Verfügung gestellt und bieten damit Schutz für IP und darüberliegende Protokolle. Eine typische Anwendung von IPsec sind "Virtuelle Private Netzwerke" (VPNs).

Ferner bekannt ist die Technik "dynamisches Routing", bei der Router mittels eines dynamischen Routingprotokolls miteinander kommunizieren. Ein Router kann mit einem solchen Protokoll einem benachbarten Router annoncieren, welche Netze momentan über ihn erreicht werden können. Ein Router, der diese Erreichbarkeitsinformationen annonciert bekommt, kann sie an andere Router weiterannoncieren. Vereinfacht gesagt weiß auf diese Weise jeder Router, der an dem dynamischen Routingprotokoll teilnimmt, welche Netze momentan auf welchen Wegen erreicht werden können. Dies ermöglicht Ausfallsicherheit und Lastverteilung innerhalb des Gesamtnetzwerks. Ein Beispiel für ein dynamisches Routingprotokoll ist das "Border Gateway Protocol" (BGP, RFC 1771, http://www.ietf.org/rfc/rfc1771.txt).

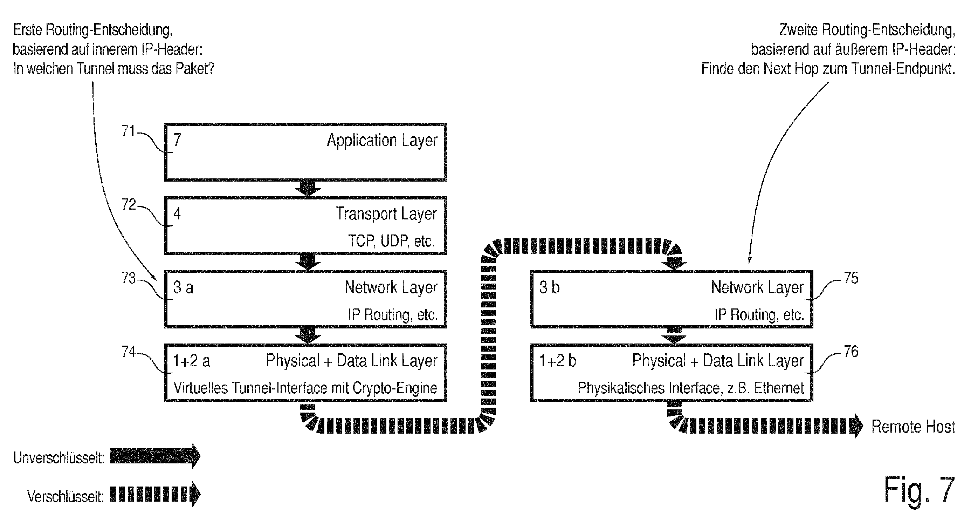

Die beiden Techniken IPsec und dynamisches Routing sind bisher nicht ohne weiteres miteinander kompatibel. Eine entsprechende Erläuterung und grafische Darstellung ist aus der Internet-Veröffentlichung http://www.av8n.com/security/mast.htm bekannt. In Fig. 7 ist die grafische Darstellung aus dieser Internet-Veröffentlichung in modifizierter Form wiedergegeben. Sie zeigt die Verarbeitungsschritte, die eine IPsec-fähige Datenverarbeitungsvorrichtung für ausgehende Datenpakete durchführen muss. Diese Darstellung basiert nicht auf dem ISO/OSI Referenzmodell, sondern auf dem praxisnäheren TCP/IP Referenzmodell, wie es unter anderem in dem Buch "Computer Networks" von Andrew S. Tanenbaum (ISBN 0-13-394248-1) verwendet wird. Es unterscheidet sich vom ISO/OSI Referenzmodell lediglich dadurch, dass die OSI-Schichten 1 und 2 zu einer einzigen Schicht zusammengefasst sind, und dass die OSI-Schichten 5 und 6, die in der Praxis selten vorkommen, weggelassen werden. In Fig. 7 werden allerdings die Nummern des ISO/OSI Referenzmodells verwendet, da diese Nummern gebräuchlich sind.

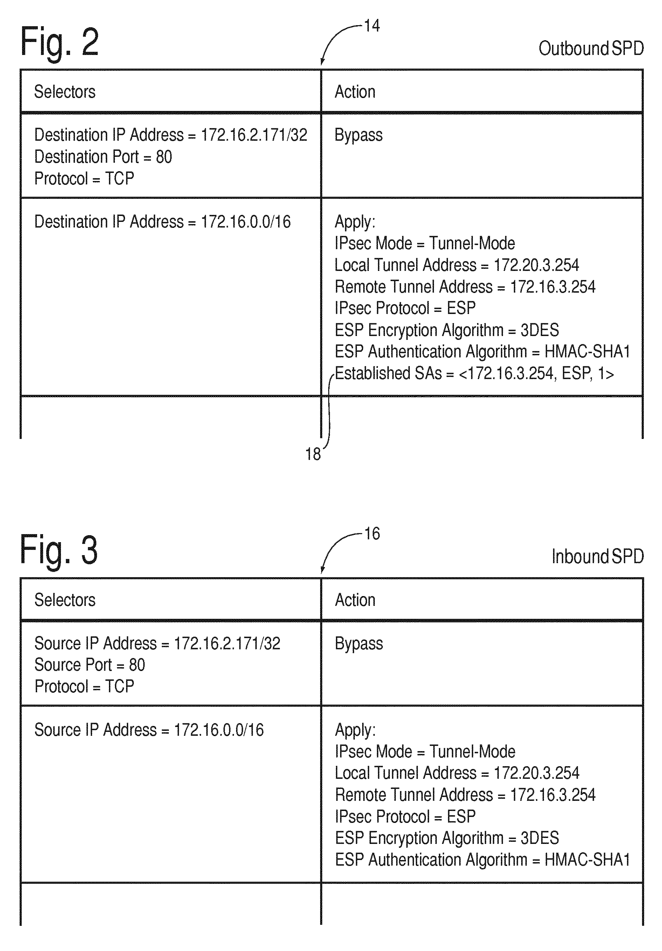

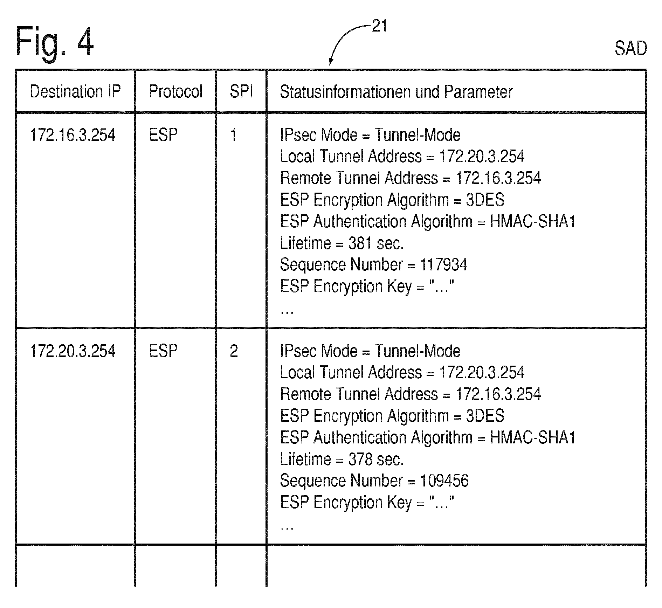

Auf einer IPsec-fähigen Datenverarbeitungsvorrichtung wird ein ausgehendes Datenpaket zunächst von IPsec verarbeitet (Schicht 3a und 1+2a, Bezugszeichen 73 bzw. 74) und anschließend über den normalen Routing-Mechanismus versandt (Schicht 3b und 1+2b, Bezugszeichen 75 bzw. 76). Dabei wird zweimal eine Routing-Entscheidung getroffen: Die erste Routing-Entscheidung 73 legt fest, über welchen IPsec-Tunnel das Datenpaket geschickt wird. Hierfür wird die IPsec-Datenstruktur "Security Policy Database" (SPD) 14 verwendet. Die zweite Routing-Entscheidung 75 legt fest, über welche physikalische Netzwerkschnittstelle bzw. an welchen "Next Hop" 53 das von IPsec verarbeitete Datenpaket versandt werden soll. Hierfür wird die Routingtabelle 12 verwendet. Mit dem Begriff "IPsec-Tunnel" wird ein Paar von "Security Associations" (SAs) im "Tunnel-Mode" gemäß RFC 2401 bezeichnet. Die IPsec-Datenstrukturen Outbound SPD 14, Inbound SPD 16 und "Security Association Database" (SAD) 21 sind beispielhaft in Fig. 2 bis 4 dargestellt.

Die Inkompatibilität von IPsec und dynamischem Routing rührt daher, dass die Erreichbarkeitsinformationen, die eine Datenverarbeitungsvorrichtung mittels eines dynamischen Routingprotokolls annonciert bekommt, von IPsec nicht berücksichtigt werden. Diese Erreichbarkeitsinformationen werden von dem Routing Daemon 23, welcher das dynamische Routingprotokoll implementiert, in die Routingtabelle 12 eingepflegt. Auf diese Datenstruktur greift IPsec jedoch nicht zu.

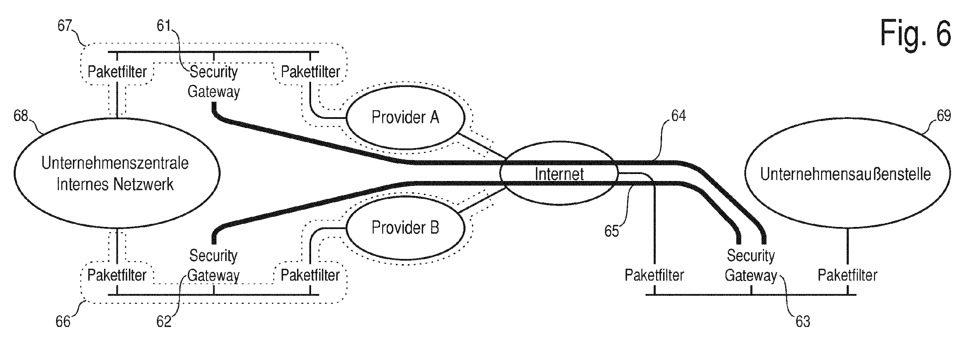

In Fig. 6 ist ein Beispielnetzwerk zu sehen, bei dem die Auswirkungen dieser Inkompatibilität zutage treten: Die drei abgebildeten Security Gateways 61, 62, 63 kommunizieren miteinander durch die beiden IPsec-Tunnels 64, 65 mittels eines dynamischen Routingprotokolls. Fällt eine der beiden Internet-Anbindungen 66, 67 der Unternehmenszentrale 68 aus, so erfährt dies das Security Gateway 63 in der Außenstelle 69 durch das dynamische Routingprotokoll, und es entfernt aus seiner Routingtabelle jene Routen, die über die ausgefallene Internet-Anbindung verlaufen. IPsec müsste nun den gesamten Datenverkehr über den Tunnel versenden, der über die noch funktionierende Internet-Anbindung verläuft. Dies findet jedoch nicht statt, da die Erreichbarkeitsinformationen, die über das dynamische Routingprotokoll gelernt wurden, von IPsec nicht verwendet werden. Das Security Gateway 63 in der Außenstelle 69 schickt daher unter Umständen weiterhin Datenverkehr über den nicht mehr funktionierenden Tunnel, was zu Paketverlusten und schlimmstenfalls zum Ausfall des VPNs führt, obwohl noch ein funktionierender Tunnel zur Verfügung steht.

Aus dem Stand der Technik ist der Lösungsversuch "IIPtran" bekannt (http://www.isi.edu/touch/pubs/draft-touch-ipsec-vpn-04.txt, veröffentlicht am 24. Juni 2002). IIPtran ersetzt den IPsec-Tunnel-Mode durch IPIP-Tunnels in Verbindung mit dem IPsec-Transport-Mode: Bei ausgehenden Datenpaketen geschieht das Einpacken (Encapsulation) in einen Tunnel zunächst in einem eigenen, separaten Schritt, basierend auf der Routingtabelle 12. Erst danach wird das resultierende (in den Tunnel enkapsulierte) Datenpaket von IPsec verarbeitet. Eingehende Datenpakete werden entsprechend umgekehrt behandelt. Damit sei IPsec im Ergebnis kompatibel mit dynamischem Routing.

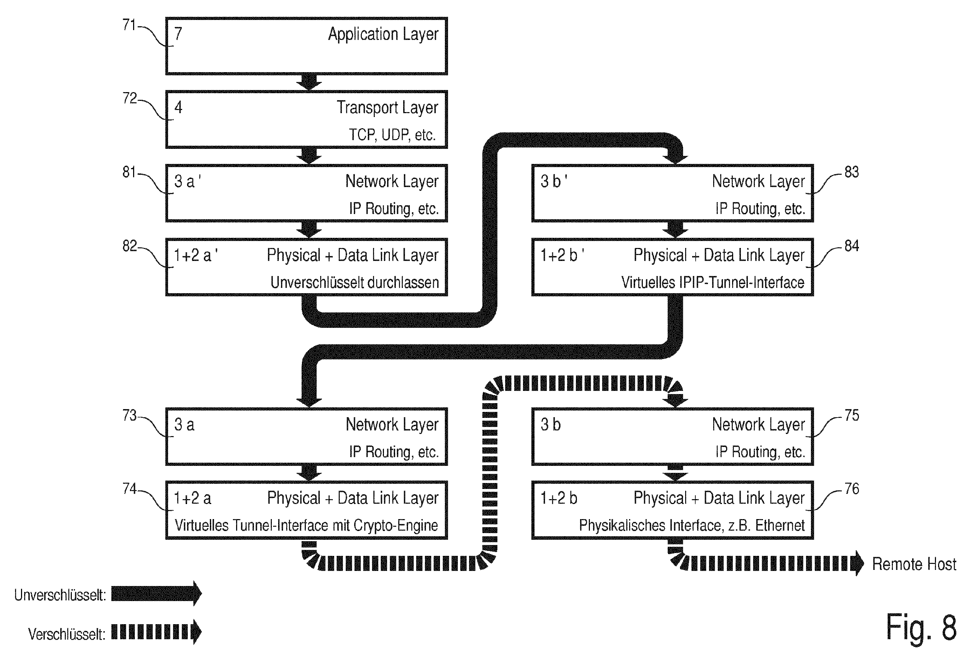

Eine Interpretation dieser Lösung im Sinne der genannten Einordnung von IPsec in das TCP/IP Referenzmodell ist in Fig. 8 dargestellt. Jede der Schichten 3a, 1+2a, 3b und 1+2b (Bezugszeichen 81, 82, 83, 84, 73, 74, 75, 76) wird zweimal durchlaufen. Es handelt sich dabei jeweils um dieselbe Schicht, nur der Zeitpunkt, an dem die Schicht das erste und das zweite mal durchlaufen wird, ist ein anderer. In Fig. 8 sind die unterschiedlichen Zeitpunkte durch einen bzw. keinen Apostroph hinter der Schichtnummer kenntlich gemacht.

Die Architektur von IIPtran sorgt dafür, dass vor der Verarbeitung eines ausgehenden Pakets durch IPsec zwingend erst die Schicht 3b' (83) durchlaufen wird, in der das Paket anhand der dynamisch erlernten Erreichbarkeitsinformationen in einen IPIP-Tunnel eingepackt wird. Dies geschieht dadurch, dass das Paket beim ersten Durchlauf der Schichten 3a' (81) und 1+2a' (82) unverändert bleibt. Eine entsprechend konfigurierte SPD stellt sicher, dass diese beiden Schichten beim ersten Durchlauf praktisch übersprungen werden. Erst beim zweiten Durchlauf der Schichten 3a (73) und 1+2a (74) wird das Paket tatsächlich von IPsec verarbeitet.

Ein Nachteil von IIPtran ist, dass die in IPsec integrierte Zugangskontrolle nicht mehr verwendet werden kann: Zu dem Zeitpunkt, zu dem für ein ausgehendes oder eingehendes Datenpaket die Zugangskontrolle mittels der SPD stattfindet, d.h. auf Schicht 3a (73), ist das Datenpaket in den IPIP-Tunnel eingepackt. Die Zugangskontrolle ist daher nur bezogen auf den äußeren IP-Header (den des Tunnels) möglich, nicht aber bezogen auf den inneren IP-Header (den des eigentlichen Datenpakets).

Zwar kann alternativ auf Schicht 3b' (83) eine Zugangskontrolle mittels eines normalen IP-Paketfilters durchgeführt werden, allerdings besteht dann die Schwierigkeit, dass zu diesem Zeitpunkt von einem eingehenden Datenpaket nicht mehr bekannt ist, über welche Security Association (SA) es empfangen wurde. Eine Zugangskontrolle ist auf Schicht 3b' (83) somit nur global für alle IIPtran-Tunnels möglich, und nicht differenziert für jeden einzelnen IIPtran-Tunnel. Dies ist eine Sicherheitslücke: Eine erste Datenverarbeitungsvorrichtung kann einer zweiten Datenverarbeitungsvorrichtung durch einen IIPtran-Tunnel ein Datenpaket mit gefälschter Absenderadresse schicken, wenn die zweite Datenverarbeitungsvorrichtung die Datenverarbeitungsvorrichtung, der diese Absenderadresse eigentlich gehört, über einen ihrer IIPtran-Tunnels erreichen kann ("IP-Spoofing"). Prinzipiell ist es möglich, dass die Information, über welche SA ein eingehendes Datenpaket empfangen wurde, gespeichert wird und dann in Schicht 3b' (83) zur Verfügung steht, allerdings ist dies in den Standards nicht vorgeschrieben. Darüber hinaus bieten manche Betriebssysteme auf Schicht 3b' (83) gar keinen IP-Paketfilter an, oder sie bieten keinen IP-Paketfilter mit gleichwertigen Matching-Funktionen wie die SPD an.

In einer überarbeiteten Version von RFC 2401 (RFC 4301, http://www.ietf.org/rfc/rfc4301.txt) wird auf IIPtran hingewiesen, verbunden mit folgender Warnung: "Die Zugangskontrolle, die ein wichtiger Teil von IPsec ist, wird im Zusammenhang [mit IIPtran] signifikant eingeschränkt, da sie nicht auf die Ende-zu-Ende Header von Datenpaketen angewendet werden kann, die auf diese Weise über eine Transport-Mode SA geschickt werden. Daher sollte diese Verwendung des Transport-Mode vor ihrem konkreten Einsatz sorgsam abgewogen werden." (Übersetzung aus RFC 4301)

Ein weiterer Nachteil von IIPtran tritt zutage, wenn zwischen zwei Datenverarbeitungsvorrichtungen mehrere IIPtran-Tunnels konfiguriert werden müssen. Dies kann etwa notwendig sein, wenn über diese Tunnels Datenverkehr mit jeweils unterschiedlicher Dienstgüte verschickt werden soll (Differentiated Services, Quality of Service). IIPtran erfordert für jeden dieser Tunnels auf beiden Endpunkten eine zusätzliche IP-Adresse, was im Hinblick auf die Skalierbarkeit problematisch ist. Beim IPsec-Tunnel-Mode sind dagegen keine zusätzlichen IP-Adressen notwendig, wenn zwischen zwei Datenverarbeitungsvorrichtungen mehrere SAs konfiguriert werden.

In einer neueren Revision der IIPtran-Spezifikation (RFC 3884, http://www.ietf.org/rfc/rfc3884.txt, veröffentlicht am 28. September 2004) werden in Abschnitt 4 drei alternative Lösungsversuche für das Problem der Inkompatibilität von IPsec und dynamischem Routing zusammen mit ihren jeweiligen Nachteilen dargestellt.

Ein Nachteil von IIPtran und allen drei alternativen Lösungsversuchen ist, dass sie die Verarbeitung von Datenpaketen (Fig. 7) mehr oder minder stark modifizieren: IIPtran erfordert das zweifache Durchlaufen der Schichten 3a, 1+2a, 3b und 1+2b (73, 74, 75, 76). Die "Alternative 1" erfordert die Anpassung von IPsec, so dass die SAs aus Schicht 3a und 1+2a (73, 74) in Schicht 3b (75) als virtuelle Netzwerkschnittstellen zur Verfügung gestellt werden (bekannt aus WO 01/82097 A1, veröffentlicht am 1. November 2001). Die "Alternative 3" erfordert die Anpassung des Routings in Schicht 3b (75), so dass es auf die SAD von Schicht 3a und 1+2a (73, 74) zugreift. Die "Alternative 2" wird in Abschnitt 4.2.1 der IIPtran-Spezifikation als unpraktikabel bezeichnet.

Durch diese Modifizierungen wird die Verarbeitung von Datenpaketen komplizierter und intransparenter. Da die Wahrscheinlichkeit einer Sicherheitslücke in einem System proportional zu dessen Komplexität wächst, erhöht sich durch diese Modifizierungen das Risiko, dass Implementationen mit Sicherheitsmängeln behaftet sind. Zugleich ist es für Sicherheitsexperten schwieriger, das Protokoll und seine Implementationen auf Sicherheitsmängel zu analysieren.

Ein weiterer Nachteil von IIPtran ist schließlich, dass das zweifache Durchlaufen der Schichten 3a, 1+2a, 3b und 1+2b (73, 74, 75, 76) die Performance beeinträchtigt.

Es ist Aufgabe der Erfindung, die Kompatibilität zwischen IPsec und dynamischem Routing herzustellen, ohne die in IPsec integrierte Zugangskontrolle zu beeinträchtigen.Diese Aufgabe wird durch die Lehre der unabhängigen Patentansprüche gelöst.

Bevorzugte Weiterbildungen der Erfindung sind Gegenstand der abhängigen Ansprüche.

Es ist ein Vorteil dieser Erfindung, keine zusätzlichen IP-Adressen zu erfordern, wenn zwischen zwei Datenverarbeitungsvorrichtungen mehrere IPsec-Tunnels konfiguriert werden müssen. Ein weiterer Vorteil der Erfindung ist, daß es nicht erforderlich ist, die Verarbeitung von Datenpaketen zu modifizieren.

Im Folgenden wird eine bevorzugte Ausführungsform der Erfindung unter Bezugnahme auf die beiliegenden Zeichnungen näher erläutert. Dabei zeigen:
Fig. 1 eine schematische Darstellung einer erfindungsgemäßen Datenverarbeitungsvorrichtung;
Fig. 2 eine Outbound SPD;
Fig. 3 eine Inbound SPD;
Fig. 4 eine SAD;
Fig. 5 die Routingtabelle eines Routing-Daemons;
Fig. 6 ein redundantes VPN mit Unternehmenszentrale und Außenstelle;
Fig. 7 ein Schichtenmodell von IPsec;
Fig. 8 ein Schichtenmodell von IIPtran.

Der Erfindung liegt die Erkenntnis zugrunde, dass die IPsec-Datenstruktur SPD Gemeinsamkeiten mit einer Routingtabelle aufweist.

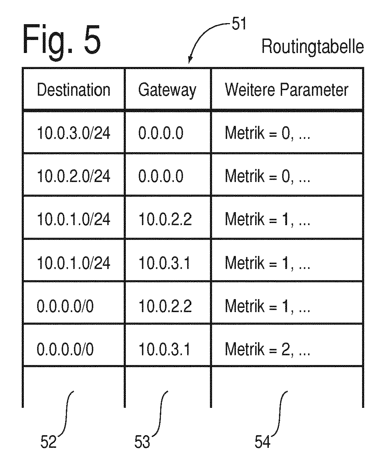

Ein Eintrag in einer Routingtabelle 51 (Fig. 5) besteht aus dem "Destination" 52, d.h. einer Netzwerkzieladresse, aus dem "Gateway" oder "Next Hop" 53, d.h. der Netzwerkadresse der Datenverarbeitungsvorrichtung, an die Pakete mit dieser Netzwerkzieladresse weiterzuleiten sind, und gegebenenfalls noch weiteren Parametern wie etwa einer Metrik 54, die, falls die Routingtabelle mehrere Einträge für dieselbe Netzwerkzieladresse enthält, eine Bewertung dieser Einträge ermöglicht. so dass der beste Eintrag verwendet werden kann.

Ein Eintrag in einer Outbound SPD 14 (Fig. 2) besteht aus einem oder mehreren "Selectors" und einer "Action". Ein "Selector" ist ein Wert, den ein bestimmtes Header-Feld eines ausgehenden Datenpakets haben muss. Die "Action" spezifiziert, wie mit einem Datenpaket zu verfahren ist, wenn es alle "Selectors" des SPD-Eintrags erfüllt: Verwerfen des Datenpakets ("Discard"), Durchlassen des Datenpakets im Klartext ("Bypass"), oder Verarbeiten des Datenpakets durch IPsec ("Apply"). Im letztgenannten Fall enthält der SPD-Eintrag die Spezifikation einer SA, d.h. er listet beispielsweise auf, welche Algorithmen auf das Paket angewendet werden sollen. Wenn es sich um eine Tunnel-Mode SA handelt, dann enthält diese Spezifikation die IP-Adresse des anderen Tunnelendpunkts (gemäß RFC 2401, Abschnitt 5.1.2.1 bzw. RFC 4301, Abschnitt 4.4.1.2).

Ein Eintrag in einer Routingtabelle 51 hat die gleiche Semantik wie ein Eintrag in einer Outbound SPD 14, der einen Selector vom Typ "Destination IP Address" mit einer Netzwerkzieladresse 52 aufweist, und die Action "Apply" mit der Spezifikation einer Tunnel-Mode SA aufweist, wobei diese SA-Spezifikation als IP-Adresse des anderen Tunnelendpunkts das Gateway 53 verwendet.

Folglich besitzt eine IPsec-fähige Datenverarbeitungsvorrichtung zwei Routingtabellen: Erstens die Outbound SPD 14 in Schicht 3a (73), und zweitens die normale Routingtabelle 12 in Schicht 3b (75).

Durch die SAs von IPsec wird ein Overlay-Netzwerk aufgebaut. Um ein Overlay-Netzwerk zu realisieren benötigt man eine zusätzliche Routingtabelle, wenn die Adressbereiche des Overlay-und des Basis-Netzwerks nicht disjunkt sind. IIPtran verwendet disjunkte Adressbereiche.

Die Inbound SPD 16 hat keine Routingfunktion, sondern dient nur als IP-Paketfilter für eingehende Datenpakete.

Gemäß einer Ausführungsform der Erfindung kommunizieren IPsec-fähige Datenverarbeitungsvorrichtungen durch die IPsec-Tunnels miteinander über ein dynamisches Routingprotokoll. Eine Datenverarbeitungsvorrichtung teilt mittels dieses dynamischen Routingprotokolls den Datenverarbeitungsvorrichtungen, zu denen sie IPsec-Tunnels hat, durch diese IPsec-Tunnels mit, welche Netzwerkadressen aktuell über sie erreicht werden können. Eine Datenverarbeitungsvorrichtung 1, die auf die Weise eine Erreichbarkeitsinformation 11 erhält, pflegt diese nicht in die normale Routingtabelle 12 ein, sondern in die IPsec-Datenstrukturen Outbound SPD 14, Inbound SPD 16 und SAD 21. Wenn in der Erreichbarkeitsinformation 11 eine neue Route annonciert wird, führt die Datenverarbeitungsvorrichtung 1 folgende Schritte durch:
(a) Die Datenverarbeitungsvorrichtung 1 fügt in ihre Outbound SPD 14 einen Eintrag ein 15, der einen Selector vom Typ "Destination IP Address" mit der Netzwerkzieladresse aus der Erreichbarkeitsinformation 11 aufweist, und der die Action "Apply" mit der Spezifikation einer Tunnel-Mode SA aufweist, wobei diese SA-Spezifikation als IP-Adresse des anderen Tunnelendpunkts das Gateway aus der Erreichbarkeitsinformation 11 verwendet.
(b) RFC 2401 schreibt vor, dass ein Eintrag in der Outbound SPD 14, für den bereits SAs aufgebaut wurden, Zeiger 18 ("Links") zu den SAD-Einträgen dieser SAs aufweisen muss. Die Datenverarbeitungsvorrichtung 1 ergänzt daher den neu in die Outbound SPD 14 eingefügten Eintrag um diese Zeiger 18, wenn passende SAs bereits aufgebaut wurden. Wenn die Outbound SPD 14 so konfiguriert ist, dass es zu der Datenverarbeitungsvorrichtung, die in der Erreichbarkeitsinformation 11 als Gateway spezifiziert wurde, nur eine SA geben kann, dann genügt es, die SAD 21 nach einer Tunnel-Mode SA zu durchsuchen 20, die als IP-Adresse des anderen Tunnelendpunkts das Gateway aus der Erreichbarkeitsinformation 11 verwendet.
(c) Damit auch der Rückweg geöffnet wird, fügt die Datenverarbeitungsvorrichtung 1 in die Inbound SPD 16 einen Eintrag ein 17, der einen Selector vom Typ "Source IP Address" mit der Netzwerkzieladresse aus der Erreichbarkeitsinformation 11 aufweist, und der die Action "Apply" mit der Spezifikation einer Tunnel-Mode SA aufweist, wobei diese SA-Spezifikation als IP-Adresse des anderen Tunnelendpunkts das Gateway aus der Erreichbarkeitsinformation 11 verwendet.

Bei IPsec-Implementationen, die nicht vollständig standardkonform sind, sind unter Umständen nicht alle diese Schritte notwendig.

In RFC 4301 wurden die Datenstrukturen SPD und SAD modifiziert. Die Erfindung und ihre bevorzugten Weiterbildungen werden in diesem Patent auf der Basis der Spezifikation in RFC 2401 erläutert, sie sind jedoch prinzipiell auch mit RFC 4301 verwendbar.

Wenn die Datenverarbeitungsvorrichtung 1 eine Erreichbarkeitsinformation 11 erhält, in der eine Route zurückgenommen wird, dann macht die Datenverarbeitungsvorrichtung 1 die vorher durchgeführten Schritte rückgängig: Sie entfernt 15 den Eintrag aus der Outbound SPD 14 (Schritt (a)) mitsamt seinen Zeigern 18 in die SAD 21 (Schritt (b)) und sie entfernt 17 den Eintrag aus der Inbound SPD 16 (Schritt (c)).

In einer Ausführungsform der Erfindung wird die Sicherheit verbessert, indem die Datenverarbeitungsvorrichtung 1 über einen IPsec-Tunnel zu einer zweiten Datenverarbeitungsvorrichtung eingehend nur Datenpakete zulässt, die an eine Netzwerkzieladresse gerichtet sind, die die Datenverarbeitungsvorrichtung 1 zuvor an die zweite Datenverarbeitungsvorrichtung annonciert hat. Hierzu fügt 17 die Datenverarbeitungsvorrichtung 1 in Schritt (c) für jede Netzwerkzieladresse, die sie der zweiten Datenverarbeitungsvorrichtung bisher annonciert hat, einen Eintrag in die Inbound SPD 16 ein, der neben dem Selector vom Typ "Source IP Address" mit der Netzwerkzieladresse aus der Erreichbarkeitsinformation 11 auch noch einen Selector vom Typ "Destination IP Address" mit der Netzwerkzieladresse, die an die zweite Datenverarbeitungsvorrichtung annonciert wurde, aufweist. Somit werden in Schritt (c) genauso viele Einträge in die Inbound SPD 16 eingefügt 17, wie bisher Netzwerkzieladressen an die zweite Datenverarbeitungsvorrichtung annonciert wurden.

In einer weiteren Ausführungsform hält die Datenverarbeitungsvorrichtung 1, wenn dieselbe Netzwerkzieladresse von mehreren Datenverarbeitungsvorrichtungen annonciert wurde, alle diese Erreichbarkeitsinformationen 11 im Speicher vor. Die Datenverarbeitungsvorrichtung 1 bewertet die Erreichbarkeitsinformationen 11, und fügt stets nur die Beste in die Outbound SPD 14, Inbound SPD 16 und SAD 21 ein 15, 17, 20. Wird diese Route zurückgenommen, dann wird die Beste unter den verbliebenen Erreichbarkeitsinformationen 11 ausgewählt und anstelle der bisherigen Route in die Outbound SPD 14, Inbound SPD 16 und SAD 21 eingefügt 15, 17, 20.

In einer weiteren Ausführungsform wird die Sicherheit verbessert, indem die Datenverarbeitungsvorrichtung 1 die Erreichbarkeitsinformationen 11, die ihr von anderen Datenverarbeitungsvorrichtungen annonciert werden, filtert, bevor sie sie in die Outbound SPD 14, Inbound SPD 16 und SAD 21 einfügt 15, 17, 20. Oft unterstehen diese Datenverarbeitungsvorrichtungen anderen Administratoren, so dass die annoncierten Erreichbarkeitsinformationen nicht vollkommen vertrauenswürdig sind. Analog kann die Datenverarbeitungsvorrichtung 1 die Erreichbarkeitsinformationen, die sie anderen Datenverarbeitungsvorrichtungen annonciert, filtern.

In einer weiteren Ausführungsform kann die Datenverarbeitungsvorrichtung 1 die Parameter von Erreichbarkeitsinformationen verändern, die ihr annonciert werden, oder die sie an andere Datenverarbeitungsvorrichtungen annonciert. So kann die Datenverarbeitungsvorrichtung 1 beispielsweise die Metrik von Erreichbarkeitsinformationen 11, die ihr annonciert werden modifizieren, so dass für bestimmte Netzwerkzieladressen der Weg über eine bestimmte andere Datenverarbeitungsvorrichtung immer bevorzugt wird, auch wenn diese ihre Erreichbarkeitsinformationen 11 mit einer schlechteren Metrik annonciert.

Wie zuvor erwähnt wird durch die SAs von IPsec ein Overlay-Netzwerk aufgebaut. In einer Ausführungsform der Erfindung importiert die Datenverarbeitungsvorrichtung 1 Erreichbarkeitsinformationen, die sie über das dynamische Routing im Overlay-Netzwerk empfängt, in das dynamische Routing im Basis-Netzwerk, und exportiert Erreichbarkeitsinformationen, die sie über das dynamische Routing im Basis-Netzwerk empfängt, in das dynamische Routing im Overlay-Netzwerk. Ein Anwendungsbeispiel ist in Fig. 6 abgebildet: Angenommen, das Interne Netzwerk der Unternehmenszentrale 68 ist ein komplexes, weit verzweigtes Netzwerk, und innerhalb dieses Netzwerks wird ein dynamisches Routingprotokoll verwendet. Die beiden Security Gateways 61, 62 der Unternehmenszentrale nehmen an diesem internen Routingprotokoll teil. Sie empfangen Erreichbarkeitsinformationen über das interne Routingprotokoll, die sie an das Security Gateway 63 in der Unternehmensaußenstelle weiterannoncieren (Export in das dynamische Routing im Overlay-Netzwerk). Sie empfangen umgekehrt Erreichbarkeitsinformationen vom Security Gateway 63, die sie über das interne Routingprotokoll weiterannoncieren (Import in das dynamische Routing im Basis-Netzwerk). Falls es zu einem Ausfall innerhalb des Internen Netzwerks der Unternehmenszentrale 68 kommt, so dass das Interne Netzwerk in zwei disjunkte Teile zerfällt, dann ist vom Security Gateway 63 aus gesehen der eine Teil des Internen Netzwerks nur noch über den IPsec-Tunnel 64 zu Security Gateway 61 erreichbar, und der andere Teil nur noch über den IPsec-Tunnel 65 zu Security Gateway 62. Durch den Export in das dynamische Routing im Overlay-Netzwerk besitzt das Security Gateway 63 in der Außenstelle detaillierte Informationen darüber, welcher Teil des Internen Netzwerks der Unternehmenszentrale 68 über welchen Tunnel 64, 65 erreichbar ist. Durch den Import in das dynamische Routing im Basis-Netzwerk besitzen zugleich Datenverarbeitungsvorrichtungen, die sich im Internen Netzwerk der Unternehmenszentrale 68 befinden, detaillierte Informationen darüber, über welches Security Gateway 61, 62 sie noch die Unternehmensaußenstelle 69 erreichen können.

Das dynamische Routing im Overlay-Netzwerk kann auf zwei Arten realisiert werden: Mit einem herkömmlichen Routingprotokoll wie BGP, oder mit einem neuen, auf IPsec zugeschnittenen Routingprotokoll.

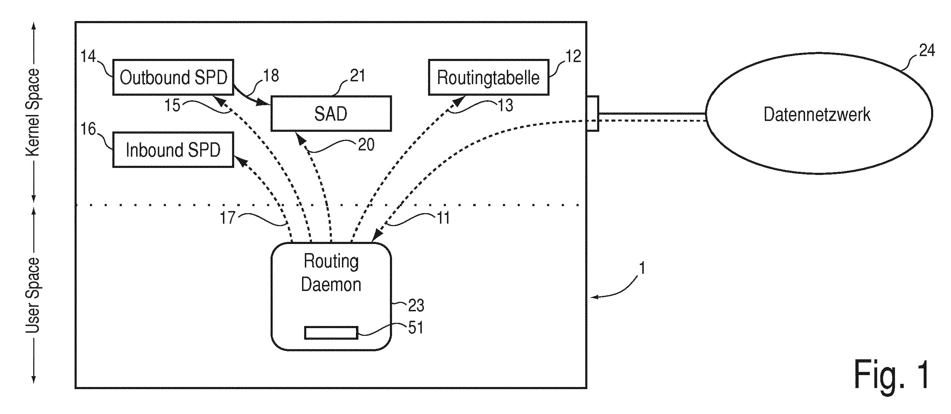

Eine Ausführungsform der Erfindung, die für das dynamische Routing im Overlay-Netzwerk ein herkömmliches Routingprotokoll verwendet, ist in Fig. 1 abgebildet. Das Routingprotokoll ist im Routing Daemon 23 implementiert. Ein erfindungsgemäßer Routing Daemon 23 muss unterscheiden, ob sich eine Erreichbarkeitsinformation 11, die ihm annonciert wird, auf das Basis-Netzwerk oder das Overlay-Netzwerk bezieht. Die Unterscheidung kann realisiert werden, indem gemeinsam mit einer Erreichbarkeitsinformation 11 annonciert wird, worauf sie sich bezieht. Alternativ kann die Unterscheidung auch realisiert werden, indem lokal auf der Datenverarbeitungsvorrichtung 1 vorkonfiguriert wird, welche Erreichbarkeitsinformationen 11 als sich auf das Basis-Netzwerk beziehend, und welche als sich auf das Overlay-Netzwerk beziehend interpretiert werden sollen, etwa indem manuell eine Liste von Netzwerkzieladressen oder von Gateways festgelegt wird. Eine Erreichbarkeitsinformation 11 würde dann als sich auf das Overlay-Netzwerk beziehend interpretiert werden, wenn ihre Netzwerkzieladresse bzw. ihr Gateway in der Liste aufgeführt ist.

Ein erfindungsgemäßer Routing Daemon 23 muss Erreichbarkeitsinformationen 11, die sich auf das Overlay-Netzwerk beziehen, in die IPsec-Datenstrukturen Outbound SPD 14, Inbound SPD 16 und SAD 21 einpflegen 15, 17, 20. Typischerweise enthält ein Routing Daemon 23 eine Routine, die für das Einfügen 13 von Routen in die normale Routingtabelle 12 zuständig ist. Dort kann eine Abzweigung eingebaut werden, so dass eine Erreichbarkeitsinformation 11 stattdessen in die IPsec-Datenstrukturen 14, 16, 21 eingefügt 15, 17, 20 wird. Eine weitere Abzweigung wird analog in die Routine eingebaut, die für das Entfernen 13 von Routen aus der normalen Routingtabelle 12 zuständig ist.

Zum Einpflegen 15, 17, 20 in die IPsec-Datenstrukturen 14, 16, 21 kann die Programmierschnittstelle "PF_KEY" verwendet werden (RFC 2367, http://www.ietf.org/rfc/rfc2367.txt; siehe auch die Erweiterungen in der Internet-Veröffentlichung http://www.kame.net/newsletter/20021210/). Für das Einfügen 15, 17 in die Outbound SPD 14 und Inbound SPD 16 gemäß Schritt (a) und Schritt (c) schickt der Routing Daemon eine Nachricht vom Typ "SADB_X_SPDADD" an den Kernel. Bildlich gesprochen wird dabei eine Route zu einer IPsec-Policy konvertiert. Zum späteren Entfernen 15, 17 der Einträge aus der Outbound SPD 14 und Inbound SPD 16 verwendet man eine Nachricht vom Typ "SADB_X_SPDDELETE". Zum Durchsuchen 20 der SAD 21 in Schritt (b) kann man eine Nachricht vom Typ "SADB_DUMP" verwenden. Man erhält daraufhin sämtliche Security Associations zurück, die in der SAD 21 stehen, und sucht die Passende heraus. Wenn man sich beim Einfügen 15, 17, 20 einer Erreichbarkeitsinformation 11 die in Schritt (b) ermittelte SA merkt, dann kann man später beim Entfernen 15, 17, 20 der Erreichbarkeitsinformation 11 das Durchsuchen 20 der SAD 21 einsparen. Durch die Verwendung eines herkömmlichen Routingprotokolls für das dynamische Routing im Overlay-Netzwerk ist es unter Umständen nicht ohne weiteres möglich, mehrere IPsec-Tunnels zwischen zwei Datenverarbeitungsvorrichtungen zu konfigurieren, da herkömmliche Routingprotokolle im Allgemeinen nicht vorsehen, dass gemeinsam mit einer Erreichbarkeitsinformation 11 annonciert wird, auf welche SAs sich diese bezieht. Ohne eine solche Funktionalität ist es unter Umständen nicht möglich, in Schritt (b) die passenden SAs zu bestimmen.

Eine Ausführungsform der Erfindung, die für das dynamische Routing im Overlay-Netzwerk ein neues, auf IPsec zugeschnittenes Routingprotokoll verwendet, kann diesen Nachteil beseitigen, beispielsweise durch Annoncieren der "Security Parameter Indexes" (SPIs) der passenden SAs gemeinsam mit einer Erreichbarkeitsinformation 11. Dies hat zugleich den Vorteil, dass das Einpflegen 15, 17, 20 von Erreichbarkeitsinformationen 11 in die IPsec-Datenstrukturen 14, 16, 21 beschleunigt wird, da das Durchsuchen 20 der SAD 21 in Schritt (b) entfallen kann. Ferner wäre es bei einem solchen spezialisierten Routingprotokoll möglich, innerhalb einer Erreichbarkeitsinformation 11 nicht nur eine Netzwerkzieladresse zu annoncieren, sondern Selectors. Eine Datenverarbeitungsvorrichtung könnte beispielsweise annoncieren, dass ein erster Port einer zweiten Datenverarbeitungsvorrichtung über eine erste SA erreichbar ist, und ein zweiter Port der zweiten Datenverarbeitungsvorrichtung über eine zweite SA. Dies ermöglicht also die Übermittlung von wesentlich komplexeren und feiner granulierten Erreichbarkeitsinformationen, als mit einem herkömmlichen Routingprotokoll. Es bietet sich an, dieses spezielle Routingprotokoll in das Datenverarbeitungsprogramm zu integrieren, das das IKE-Protokoll implementiert ("Internet Key Exchange", RFC 2409, http://www.ietf.org/rfc/rfc2409.txt), denn Datenverarbeitungsvorrichtungen, zwischen denen ein IPsec-Tunnel besteht, müssen zum Management des IPsec-Tunnels ohnehin mittels des IKE-Protokolls miteinander kommunizieren. Ein weiterer Vorteil ist, daß das Datenverarbeitungsprogramm, das das IKE-Protokoll implementiert, nachfolgend IKE Daemon genannt, von Haus aus in der Lage ist, die IPsec-Datenstrukturen 14, 16, 21 zu pflegen 15, 17, 20, da es für das Management von IPsec-Tunnels bereits eine Schnittstelle zum Kernel, beispielsweise PF_KEY, besitzt.

Ein Import von Erreichbarkeitsinformationen in das dynamische Routing im Basis-Netzwerk, und ein Export von Erreichbarkeitsinformationen in das dynamische Routing im Overlay-Netzwerk ist möglich, wenn ein erfindungsgemäßer IKE Daemon eine Schnittstelle zu einem Routing Daemon aufweist. Der IKE Daemon kann dann Erreichbarkeitsinformationen an den Routing Daemon weiterannoncieren, der Routing Daemon umgekehrt Erreichbarkeitsinformationen an den IKE Daemon weiterannoncieren.

Moderne Routingprotokolle bieten die Möglichkeit, dass man, wenn eine Netzwerkzieladresse über mehrere Gateways erreicht werden kann, nicht nur einfach die beste Route verwendet, sondern dass mehrere Routen parallel verwendet werden, um den Datenverkehr auf die verschiedenen Gateways zu verteilen (Load Sharing). Der Fachbegriff hierfür lautet "Equal Cost Multipath", für den Fall, dass mehrere Routen dieselbe Metrik besitzen, sowie "Unequal Cost Multipath", wenn mehrere Routen zur Verfügung stehen und der Datenverkehr daher auf sie verteilt wird, sie jedoch unterschiedliche Metriken besitzen, und daher abhängig von der Höhe der Metrik jeweils in unterschiedlichem Maße verwendet werden.

IPsec unterstützt solche Mechanismen bisher nicht, in RFC 2401 gibt es hierzu keine Aussagen. Eine erfindungsgemäße Erweiterung der IPsec-Spezifikation sieht daher so aus, dass in der "Action" eines Eintrags in der Outbound SPD 14 mehrere SA-Spezifikationen gespeichert werden können. Im einfachsten Fall werden diese SAs beim Versand eines Pakets über diesen SPD-Eintrag abwechselnd benutzt, womit die "Equal Cost Multipath" Funktionalität erreicht wäre. In einer weiteren Ausführungsform sind die SA-Spezifikationen mit einer Metrik versehen, und werden je nach ihrer Gewichtung mehr oder weniger stark verwendet, wodurch auch die "Unequal Cost Multipath" Funktionalität implementiert wird.

Schließlich werden in einer weiteren Ausführungsform der Erfindung IPsec-Tunnels dynamisch aufgebaut, d.h. ohne vorherige manuelle Einrichtung durch einen Administrator. Konkret tritt dies bei dem Funktionsprinzip der "opportunistischen Verschlüsselung" auf: Hierbei versucht ein Security Gateway, soviel ausgehenden Datenverkehr wie möglich zu verschlüsseln, indem es für jedes ausgehende Datenpaket durch Nachsehen in einem Verzeichnis überprüft, ob es ein Security Gateway gibt, über das die Datenverarbeitungsvorrichtung, für die das Datenpaket ultimativ bestimmt ist, erreicht werden kann. Im Falle, dass eine Datenverarbeitungsvorrichtung gleich über mehrere Security Gateways erreicht werden kann, bietet es sich an, dass zu sämtlichen dieser Security Gateways ein IPsec-Tunnel aufgebaut wird und anschließend ein gegenseitiges Annoncieren von Netzwerkzieladressen stattfindet wie in diesem Patent beschrieben, da im vorhinein nicht bekannt ist, ob die Datenverarbeitungsvorrichtung, für die das Datenpaket ultimativ bestimmt ist, aktuell tatsächlich über jedes der Security Gateways erreicht werden kann, die in dem Verzeichnis aufgelistet sind. Für Security Gateways, zu denen im Rahmen dieses Funktionsprinzips IPsec-Tunnels aufgebaut werden, bietet es sich an, dass sie die Absenderadresse des Datenpakets im Verzeichnis nachsehen, um zu ermitteln, welche Security Gateways für diese Absenderadresse zuständig sind, und anschließend zu allen diesen Security Gateways einen IPsec-Tunnel aufbauen. Dadurch ist gesichert, dass Datenverkehr, der in die Rückrichtung fließt, d.h. Antwortdatenverkehr, in jedem Fall über den richtigen IPsec-Tunnel verschickt wird, denn es kann in manchen Konstellationen sein, dass ein Security Gateway gegenüber einem zweiten Security Gateway priorisiert wird. Security Gateways, die IPsec-Tunnels für opportunistische Verschlüsselung aufbauen, können dem Security Gateway auf der Gegenseite die Absenderadresse des zu übermittelnden Datenverkehrs mitteilen. Alternativ können Security Gateways die Netzwerkzieladressen, die ihnen annonciert werden, in dem Verzeichnis nachsehen und anschließend zu einigen oder allen dort aufgelisteten Security Gateways einen IPsec-Tunnel aufbauen.

Als Verzeichnis kann beispielsweise das Domain Name System (DNS), das Network Information System, ein LDAP-Verzeichnis und/oder eine Datenbank verwendet werden. Das Nachsehen in dem Verzeichnis kann durch einen Cache beschleunigt werden, wobei Cache-Einträge vorzugsweise nach einer bestimmten Zeitspanne invalidiert und damit nicht mehr verwendet werden. Auch wenn für eine Adresse gar keine Security Gateways im Verzeichnis gefunden wurden kann diese Information im Cache hinterlegt werden (negatives Caching). Das Nachsehen in dem Verzeichnis kann auch für eine Netzwerkzieladresse erfolgen, welche die Adresse der Datenverarbeitungsvorrichtung, für die das Datenpaket ultimativ bestimmt ist, subsumiert, und dies kann ebenfalls durch einen Cache beschleunigt werden. Bei Ausfall oder Abbau von IPsec-Tunnels können zugehörige Cache-Einträge invalidiert werden.

Das Nachsehen in dem Verzeichnis und das Aufbauen von IPsec-Tunnels kann übersprungen werden wenn zuvor überprüft wird, ob bereits wenigstens ein IPsec-Tunnel zu einem Security Gateway aufgebaut wurde, über das die Datenverarbeitungsvorrichtung, für die das Datenpaket ultimativ bestimmt ist, erreicht werden kann. Fällt ein IPsec-Tunnel aus oder schlägt bereits sein Aufbau fehl, kann in festen oder variablen Zeitabständen ein erneuter Aufbau versucht werden. Versuche zum erneuten Aufbau des IPsec-Tunnels brauchen nur solange zu erfolgen, wie tatsächlich Datenverkehr über ihn zu verschicken ist, etwa indem gespeichert wird wann zuletzt ein Datenpaket über den IPsec-Tunnel zu verschicken gewesen wäre und Versuche zum erneuten Aufbau eingestellt werden wenn dieser Zeitpunkt eine angemessene Zeit zurückliegt. Analog kann ein bestehender IPsec-Tunnel abgebaut werden wenn kein Datenverkehr mehr über ihn zu verschicken ist, indem gespeichert wird wann zuletzt ein Datenpaket über ihn verschickt wurde und ein Abbau initiiert wird wenn dieser Zeitpunkt eine angemessene Zeit zurückliegt. Muss später erneut Datenverkehr an das Security Gateway auf der Gegenseite verschickt werden, kann wiederum ein Aufbau initiiert werden.

Unter Datenverarbeitungsvorrichtungen werden beispielsweise Computer, Laptops, PDAs oder auch UMTS-Handys verstanden. Diese können ortsfest über Kabel mit einem Datennetzwerk wie dem Internet verbunden sein. Es können aber auch schnurlose Verbindungen über IEEE 802.11, UMTS, GPRS, DECT oder Bluetooth verwendet werden.

Die Erfindung wurde zuvor anhand von bevorzugten Ausführungsformen näher erläutert. Für einen Fachmann ist jedoch offensichtlich, dass verschiedene Abwandlungen und Modifikationen gemacht werden können. Deshalb wird der Schutzbereich durch die nachfolgenden Ansprüche und ihre Äquivalente festgelegt.

**Bezugszeichenliste**

| | | | |
|---|---|---|---|
| 1 | Datenverarbeitungsvorrichtung | 61, 62, 63 | Security Gateway |
| 11 | Erreichbarkeitsinformation | 64, 65 | Tunnel |
| 12 | Routingtabelle des Betriebssystems | 66, 67 | Internet-Anbindung |
| 13 | Einfügen oder Entfernen | 68 | Unternehmenszentrale |
| 14 | Outbound SPD | 69 | Unternehmensaußenstelle |
| 15 | Einfügen oder Entfernen | 71 | Schicht 7 |
| 16 | Inbound SPD | 72 | Schicht 4 |
| 17 | Einfügen oder Entfernen | 73 | Schicht 3a |
| 18 | Zeiger | 74 | Schicht 1+2a |
| 20 | Durchsuchen | 75 | Schicht 3b |
| 21 | SAD | 76 | Schicht 1+2b |
| 23 | Routing Daemon | 81 | Schicht 3a' |
| 24 | Datennetzwerk | 82 | Schicht 1+2a' |
| 51 | Routingtabelle | 83 | Schicht 3b' |
| 52 | Destination | 84 | Schicht 1+2b' |
| 53 | Gateway | | |
| 54 | Metrik | | |

## Patentansprüche

1. Verfahren für ein Datennetzwerk mit:
Speichern einer Datenstruktur (14) in einer ersten Datenverarbeitungsvorrichtung (1),
wobei die erste Datenverarbeitungsvorrichtung (1) und eine Vielzahl von zweiten Datenverarbeitungsvorrichtungen an ein Datennetzwerk (24) angeschlossen sind,
wobei die Datenstruktur (14) eine Vielzahl von Einträgen aufnimmt, wobei jeder Eintrag eine Vielzahl von Selektoren und eine IPsec-Spezifikation eines logischen Tunnels (64, 65) zwischen der ersten Datenverarbeitungsvorrichtung (1) und den zweiten Datenverarbeitungsvorrichtungen enthält, und wobei ein Selektor Werte für bestimmte Header-Felder eines Datenpakets spezifiziert,
Verarbeiten jedes ausgehenden Datenpakets durch die erste Datenverarbeitungsvorrichtung (1) mit:
Suchen in der Datenstruktur (14) nach einem Eintrag, dessen Selektoren auf das Datenpaket zutreffen, um zu entscheiden (73), ob das Datenpaket über einen der logischen Tunnels (64, 65) verschickt wird, und falls ja, über welchen,
Anschließend Entscheiden (75), an welche zweite Datenverarbeitungsvorrichtung in dem Datennetzwerk (24) das Datenpaket verschickt wird,
Senden einer Erreichbarkeitsinformation (11)
an die erste Datenverarbeitungsvorrichtung (1) von einer zweiten Datenverarbeitungsvorrichtung, die einen Endpunkt eines logischen Tunnels (64, 65) bildet,
wobei die Erreichbarkeitsinformation (11) mindestens folgende Elemente aufweist: eine Netzwerkzieladresse (52), ein Gateway (53), und eine Information, ob die Netzwerkzieladresse (52) über das Gateway (53) neu erreichbar ist oder nicht mehr erreichbar ist,
Einpflegen der Erreichbarkeitsinformation (11) in die Datenstruktur (14) durch die erste Datenverarbeitungsvorrichtung (1).

2. System mit:
einer ersten Datenverarbeitungsvorrichtung (1), mit einer Datenstruktur (14) zum Aufnehmen einer Vielzahl von Einträgen, wobei jeder Eintrag geeignet ist, eine Vielzahl von Selektoren und eine IPsec-Spezikation eines logischen Tunnels (64, 65) aufzunehmen, und wobei ein Selektor Werte für bestimmte Header-Felder eines Datenpakets spezifiziert,
einer Vielzahl von zweiten Datenverarbeitungsvorrichtungen,
einem Datennetzwerk (24), an das die erste Datenverarbeitungsvorrichtung (1) und die zweiten Datenverarbeitungsvorrichtungen angeschlossen sind, zum Aufbauen einer Vielzahl von logischen Tunnels (64, 65) zwischen der ersten Datenverarbeitungsvorrichtung (1) und den zweiten Datenverarbeitungsvorrichtungen,
wobei die erste Datenverarbeitungsvorrichtung (1) geeignet programmiert ist, um mit jedem ausgehenden Datenpaket folgendes durchzuführen:
suchen in der Datenstruktur (14) nach einem Eintrag, dessen Selektoren auf das Datenpaket zutreffen, um zu entscheiden (73), ob das Datenpaket über einen der logischen Tunnels (64, 65) verschickt wird, und falls ja, über welchen,
anschließend entscheiden (75), an welche zweite Datenverarbeitungsvorrichtung in dem Datennetzwerk (24) das Datenpaket verschickt wird,
wobei zweite Datenverarbeitungsvorrichtungen, die einen Endpunkt eines logischen Tunnels (64, 65) bilden, geeignet programmiert sind, der ersten Datenverarbeitungsvorrichtung (1) eine Erreichbarkeitsinformation (11) zu senden, die mindestens folgende Elemente aufweist:
eine Netzwerkzieladresse (52),
ein Gateway (53),
und eine Information, ob die Netzwerkzieladresse (52) über das Gateway (53) neu erreichbar ist oder nicht mehr erreichbar ist,
und
die erste Datenverarbeitungsvorrichtung (1) geeignet programmiert ist, um die Erreichbarkeitsinformation (11) in die Datenstruktur (14) einzupflegen.

3. System gemäß Anspruch 2, **dadurch gekennzeichnet, dass**
die erste Datenverarbeitungsvorrichtung (1) geeignet programmiert ist, um in die Datenstruktur (14) einen Eintrag einzufügen (15) oder zu entfernen (15),
der einen Selektor aufweist, der für das Header-Feld von Datenpaketen, in dem die Netzwerkzieladresse eines Datenpakets gespeichert ist, die Netzwerkzieladresse (52) aus der Erreichbarkeitsinformation (11) spezifiziert,
und der eine Spezikation eines logischen Tunnels (64, 65) aufweist, wobei die Spezifikation als Netzwerkadresse der zweiten Datenverarbeitungsvorrichtung, die den anderen Endpunkt des logischen Tunnels (64, 65) bildet, das Gateway (53) aus der Erreichbarkeitsinformation (11) spezifiziert.

4. System gemäß Anspruch 2, **dadurch gekennzeichnet, dass**
die erste Datenverarbeitungsvorrichtung (1) geeignet programmiert ist,
um in die Outbound SPD (14) einen Eintrag einzufügen (15) oder zu entfernen (15),
der einen Selector vom Typ "Destination IP Address" mit der Netzwerkzieladresse (52) aus der Erreichbarkeitsinformation (11) aufweist,
und der die Action "Apply" mit der Spezifikation einer Tunnel-Mode SA aufweist, wobei diese SA-Spezifikation als IP-Adresse des anderen Tunnelendpunkts das Gateway (53) aus der Erreichbarkeitsinformation (11) spezifiziert,
um den neu in die Outbound SPD (14) eingefügten Eintrag um Zeiger (18) auf Einträge in der SAD (21) zu ergänzen oder einen solchen Zeiger (18) wieder zu entfernen,
wobei diese Einträge der SA-Spezifikation des neu in die Outbound SPD (14) eingefügten (15) oder entfernten (15) Eintrags entsprechen,
und um in die Inbound SPD (16) einen Eintrag einzufügen (17) oder zu entfernen (17),
der einen Selector vom Typ "Source IP Address" mit der Netzwerkzieladresse (52) aus der Erreichbarkeitsinformation (11) aufweist,
und der die Action "Apply" mit der Spezifikation einer Tunnel-Mode SA aufweist, wobei diese SA-Spezifikation als IP-Adresse des anderen Tunnelendpunkts das Gateway (53) aus der Erreichbarkeitsinformation (11) spezifiziert.

5. System gemäß Anspruch 2, **dadurch gekennzeichnet, dass**
die erste Datenverarbeitungsvorrichtung (1) geeignet programmiert ist, um
Erreichbarkeitsinformationen, die sie über das dynamische Routing im Overlay-Netzwerk empfängt, in das dynamische Routing im Basis-Netzwerk zu importieren, und Erreichbarkeitsinformationen, die sie über das dynamische Routing im Basis-Netzwerk empfängt, in das dynamische Routing im Overlay-Netzwerk zu exportieren.

6. System gemäß Anspruch 2, **dadurch gekennzeichnet, dass**
die erste Datenverarbeitungsvorrichtung (1) geeignet programmiert ist, um
Erreichbarkeitsinformationen mittels eines herkömmlichen dynamischen Routingprotokolls zu empfangen und zu verschicken.

7. System gemäß Anspruch 2, **dadurch gekennzeichnet, dass**
die erste Datenverarbeitungsvorrichtung (1) geeignet programmiert ist, um
Erreichbarkeitsinformationen mittels eines auf IPsec zugeschnittenen dynamischen Routingprotokolls zu empfangen und zu verschicken.

8. System gemäß Anspruch 2, **dadurch gekennzeichnet, dass**
jeder Eintrag in der Datenstruktur (14) zum Aufnehmen einer Vielzahl von IPsec-Spezikationen logischer Tunnels (64, 65) geeignet ist, wobei jede dieser IPsec-Spezifikationen eine Metrik aufweist,
und die erste Datenverarbeitungsvorrichtung (1) geeignet programmiert ist, um
ausgehende Datenpakete, auf die die Selektoren eines Eintrags in der Datenstruktur (14) zutreffen, wobei dieser Eintrag wenigstens zwei IPsec-Spezifikationen logischer Tunnels (64, 65) aufweist,
abwechselnd über die durch die IPsec-Spezifikationen des Eintrags bestimmten Tunnels (64, 65) verschickt,
wobei die Häufigkeit, mit der Datenpakete über einen der Tunnels (64, 65) verschickt werden, von der Metrik dieses Tunnels (64, 65) abhängig ist.

9. Speichermedium, das mit einer Datenverarbeitungsvorrichtung zwecks Datenaustauschs kommunizieren kann, wobei in dem Speichermedium eine Befehlsfolge gespeichert ist, die eine Datenverarbeitungsvorrichtung veranlasst, ein Verfahren gemäß Anspruch 1 durchzuführen.

## Claims

1. A method for a data network comprising:
storing a data structure (14) in a first data processing apparatus (1),
wherein the first data processing apparatus (1) and a plurality of second data processing apparatuses are connected to a data network (24),
wherein the data structure (14) accommodates a plurality of entries, wherein each entry comprises a plurality of selectors and an IPsec specification of a logical tunnel (64, 65) between the first data processing apparatus (1) and the second data processing apparatuses, and wherein a selector specifies values for certain header fields of a datagram,
processing each outgoing datagram by the first data processing apparatus (1), comprising:
searching the data structure (14) for an entry whose selectors match the datagram, for deciding (73) whether the datagram is sent over one of the logical tunnels (64, 65), and if so, over which one,
afterwards deciding (75) to which second data processing apparatus in the data network (24) the datagram is sent,
sending a reachability information (11)
to the first data processing apparatus (1) by a second data processing apparatus which is an endpoint of a logical tunnel (64, 65),
wherein said reachability information (11) comprises at least the following elements: a network destination address (52), a gateway (53), and an indication whether the network destination address (52) is newly reachable or no longer reachable via the gateway (53),
incorporating the reachability information (11) into the data structure (14) by the first data processing apparatus (1).

2. A system comprising:
a first data processing apparatus (1), which includes a data structure (14) to accommodate a plurality of entries, wherein each entry is suited to accommodate a plurality of selectors and an IPsec specification of a logical tunnel (64, 65), and wherein a selector specifies values for certain header fields of a datagram,
a plurality of second data processing apparatuses,
a data network (24) to which the first data processing apparatus (1) and the second data processing apparatuses are connected, for establishing a plurality of logical tunnels (64, 65) between the first data processing apparatus (1) and the second data processing apparatuses,
wherein the first data processing apparatus (1) is suitably programmed to perform the following for each outgoing datagram:
searching the data structure (14) for an entry whose selectors match the datagram, for deciding (73) whether the datagram is sent over one of the logical tunnels (64, 65), and if so, over which one,
afterwards deciding (75) to which second data processing apparatus in the data network (24) the datagram is sent,
wherein second data processing apparatuses which are an endpoint of a logical tunnel (64, 65) are suitably programmed to send a reachability information (11) to the first data processing apparatus (1), said reachability information (11) comprising at least the following elements:
a network destination address (52),
a gateway (53),
and an indication whether the network destination address (52) is newly reachable or no longer reachable via the gateway (53),
and
the first data processing apparatus (1) is suitably programmed to incorporate the reachability information (11) into the data structure (14).

3. A system according to claim 2 **characterized in that**
the first data processing apparatus (1) is suitably programmed to insert into (15) or to remove from (15) the data structure (14) an entry,
which has a selector that specifies the network destination address (52) of the reachability information (11) for the header field of datagrams in which the network destination address of a datagram is stored,
and which has a specification of a logical tunnel (64, 65), wherein the specification specifies the gateway (53) of the reachability information (11) as the network address of the second data processing apparatus which is the other endpoint of the logical tunnel (64, 65).

4. A system according to claim 2 **characterized in that**
the first data processing apparatus (1) is suitably programmed
to insert into (15) or to remove from (15) the outbound SPD (14) an entry,
which has a selector of type "destination IP address" with the network destination address (52) of the reachability information (11),
and which has the action "apply" with a tunnel-mode SA specification, wherein this SA specification specifies the gateway (53) of the reachability information (11) as the IP address of the other tunnel endpoint,
to add pointers (18) to the newly inserted entry in the outbound SPD (14) which point to entries in the SAD (21), or to remove such a pointer (18),
wherein these entries correspond to the SA specification of the newly inserted (15) or removed (15) entry in the outbound SPD (14),
to insert into (17) or to remove from (17) the inbound SPD (16) an entry,
which has a selector of type "source IP address" with the network destination address (52) of the reachability information (11),
and which has the action "apply" with a tunnel-mode SA specification, wherein this SA specification specifies the gateway (53) of the reachability information (11) as the IP address of the other tunnel endpoint.

5. A system according to claim 2 **characterized in that**
the first data processing apparatus (1) is suitably programmed
to import reachability information it receives from the dynamic routing in the overlay network into the dynamic routing in the base network, and to export reachability information it receives from the dynamic routing in the base network into the dynamic routing in the overlay network.

6. A system according to claim 2 **characterized in that**
the first data processing apparatus (1) is suitably programmed
to send and to receive reachability information by using a conventional dynamic routing protocol.

7. A system according to claim 2 **characterized in that**
the first data processing apparatus (1) is suitably programmed
to send and to receive reachability information by using a dynamic routing protocol tailored to IPsec.

8. A system according to claim 2 **characterized in that**
each entry in the data structure (14) is suited to accommodate a plurality of IPsec specifications of logical tunnels (64, 65), wherein each of these IPsec specifications has a metric,
and the first data processing apparatus (1) is suitably programmed
to send outgoing datagrams which are matched by the selectors of an entry in the data structure (14), wherein this entry comprises at least two IPsec specifications of logical tunnels (64, 65),
alternatingly over the tunnels (64, 65) defined by the IPsec specifications of the entry,
wherein the frequency with which datagrams are sent over one of the tunnels (64, 65) depends on the metric of this tunnel (64, 65).

9. A storage medium which can communicate with a data processing apparatus for the purpose of data exchange, wherein an instruction sequence is stored on the storage medium which causes a data processing apparatus to perform a method according to claim 1.

## Revendications

1. Procédé pour un réseau de données avec:
le stockage d'une structure de données (14) dans un premier dispositif de traitement de données (1),
le premier dispositif de traitement de données (1) et une pluralité de deuxièmes dispositifs de traitement de données sont connectés à un réseau de données (24);
la structure de données (14) enregistre une pluralité d'entrées, chaque entrée comprenant une pluralité de sélecteurs et une spécification IPsec d'un tunnel logique (64, 65) entre le premier dispositif de traitement de données (1) et les deuxièmes dispositifs de traitement de données; un selecteur spécifie des valeurs pour certains champs de l'en-tête d'un paquet de données;
le traitement de chaque paquet de données en partance par le premier dispositif de traitement de données (1) avec:
la recherche d'une entrée dans la structure de données (14) dont les selecteurs concordent avec le paquet de données, pour décider (73) si le paquet de données est envoyé par un des tunnels logiques (64, 65), et si oui, par quel;
ensuite la décision (75) vers quel deuxième dispositif de traitement de données dans le réseau de données (24) le paquet de données est envoyé;
le envoi d'une information d'accessibilité (11)
au premier dispositif de traitement de données (1) d'un deuxième dispositif de traitement de données constituent un bout d'un tunnel logique (64, 65);
la information d'accessibilité (11) comporte au moins les éléments suivants: une adresse de destination au réseau (52), une passerelle (53) et une information si l'adresse de destination au réseau (52) est nouvellement accessible ou n'est plus accessible par la passerelle (53);
la intégration de la information d'accessibilité (11) dans la structure de données (14) par le premier dispositif de traitement de données (1).

2. Système avec:
un premier dispositif de traitement de données (1) avec une structure de données (14) pour enregistrer une pluralité d'entrées; chaque entrée permet enregistrer une pluralité de sélecteurs et une spécification IPsec d'un tunnel logique (64, 65); un selecteur spécifie des valeurs pour certains champs de l'entête d'un paquet de données;
une pluralité de deuxièmes dispositifs de traitement de données;
un réseau de données (24) auquel le premier dispositif de traitement de données (1) et les deuxièmes dispositifs de traitement de données sont connectés, pour construire une pluralité de tunnels logiques (64, 65) entre le premier dispositif de traitement de données (1) et les deuxièmes dispositifs de traitement de données;
le premier dispositif de traitement de données (1) est programmé de façon appropriée pour effectuer le suivant avec chaque paquet de données en partance:
la recherche d'une entrée dans la structure de données (14) dont les selecteurs concordent avec le paquet de données, pour décider (73) si le paquet de données est envoyé par un des tunnels logiques (64, 65), et si oui, par quel;
ensuite la décision (75) vers quel deuxième dispositif de traitement de données dans le réseau de données (24) le paquet de données est envoyé;
deuxièmes dispositifs de traitement de données constituent un bout d'un tunnel logique (64, 65) sont programmés de façon appropriée pour envoyer une information d'accessibilité (11) au premier dispositif de traitement de données (1), comportant au moins les éléments suivants:
une adresse de destination au réseau (52),
une passerelle (53)
et une information si l'adresse de destination au réseau (52) est nouvellement accessible ou n'est plus accessible par la passerelle (53);
et
le premier dispositif de traitement de données (1) est programmé de façon appropriée pour intégrer la information d'accessibilité (11) dans la structure de données (14).

3. Système selon la revendication 2, **caractérisée en ce que**
le premier dispositif de traitement de données (1) est programmé de façon appropriée pour insérer (15) ou supprimer (15) une entrée dans la structure de données (14)
comportant un selecteur qui spécifie l'adresse de destination au réseau (52) de la information d'accessibilité (11) pour le champ de l'en-tête des paquets de données qui contient l'adresse de destination au réseau d'un paquet de données;
et comportant une spécification d'un tunnel logique (64, 65) qui spécifie la passerelle (53) de la information d'accessibilité (11) pour l'adresse au réseau de la deuxième dispositif de traitement de données qui constitue l'autre bout du tunnel logique (64, 65).

4. Système selon la revendication 2, **caractérisée en ce que**
le premier dispositif de traitement de données (1) est programmé de façon appropriée
pour insérer (15) ou supprimer (15) une entrée dans la Outbound SPD (14)
comportant un selecteur du type "Destination IP Address" avec l'adresse de destination au réseau (52) de la information d'accessibilité (11);
et comportant l'Action "Apply" avec la spécification d'un Tunnel-Mode SA qui spécifie la passerelle (53) de la information d'accessibilité (11) pour l'adresse IP du autre bout du tunnel;
pour ajouter des pointeurs (18) indiquant des entrées dans la SAD (21) à l'entrée nouvellement insérée dans la Outbound SPD (14), ou enlever un tel pointeur (18);
les entrées concordent avec la spécification SA de l'entrée nouvellement insérée (15) ou supprimée (15) dans la Outbound SPD (14);
et pour insérer (17) ou supprimer (17) une entrée dans la Inbound SPD (16)
comportant un selecteur du type "Source IP Address" avec l'adresse de destination au réseau (52) de la information d'accessibilité (11);
et comportant l'Action "Apply" avec la spécification d'un Tunnel-Mode SA qui spécifie la passerelle (53) de la information d'accessibilité (11) pour l'adresse IP du autre bout du tunnel.

5. Système selon la revendication 2, **caractérisée en ce que**
le premier dispositif de traitement de données (1) est programmé de façon appropriée
pour importer des informations d'accessibilité qu'il reçoit par le routage dynamique dans le réseau overlay vers le routage dynamique dans le réseau sous-jacent,
et pour exporter des informations d'accessibilité qu'il reçoit par le routage dynamique dans le réseau sous-jacent vers le routage dynamique dans le réseau overlay.

6. Système selon la revendication 2, **caractérisée en ce que**
le premier dispositif de traitement de données (1) est programmé de façon appropriée
pour recevoir et envoyer des informations d'accessibilité en utilisant un protocole de routage dynamique traditionnel.

7. Système selon la revendication 2, **caractérisée en ce que**
le premier dispositif de traitement de données (1) est programmé de façon appropriée
pour recevoir et envoyer des informations d'accessibilité en utilisant un protocole de routage dynamique dédié à IPsec.

8. Système selon la revendication 2, **caractérisée en ce que**
chaque entrée dans la structure de données (14) permet enregistrer une pluralité de spécifications IPsec de tunnels logiques (64, 65); chaque de ces spécifications IPsec comporte une métrique;
et le premier dispositif de traitement de données (1) est programmé de façon appropriée
pour envoyer des paquets de données en partance qui concordent avec les sélecteurs d'une entrée dans la structure de données (14), cette entrée comporte au moins deux spécifications IPsec de tunnels logiques (64, 65),
tour à tour par les tunnels (64, 65) déterminés par les spécifications IPsec de l'entrée;
la fréquence à laquelle les paquets de données sont envoyés par un des tunnels (64, 65) dépend de la métrique de ce tunnel (64, 65).

9. Support de données capable de communiquer avec un dispositif de traitement de données pour échange de données; sur le support de données une séquence de commande est enregistrée qui amène le dispositif de traitement de données à effectuer un procédé selon la revendication 1.
